# EUROPEAN PATENT APPLICATION

(11) **EP 3 051 901 A1**
(43) Date of publication of application: **03.08.2016**
(21) Application number: 14847981.9
(22) Date of filing: 19.09.2014
(51) Int. Cl.: H04W 72/04, H04J 1/00, H04L 1/16, H04W 28/04, H04W 28/06, H04W 80/02, H04W 92/20

(54) **MOBILE COMMUNICATION SYSTEM**

(30) Priority: 26.09.2013 JP 2013200356
(71) Applicant: NTT DOCOMO, INC., Chiyoda-ku Tokyo 100-6150 (JP)
(72) Inventor: UCHINO, Tooru, Tokyo 100-6150 (JP); TAKAHASHI, Hideaki, Tokyo 100-6150 (JP)
(74) Representative: Hoffmann Eitle
(86) International application number: PCT/JP2014/074858
(87) International publication number: WO 2015/046059

(57) **Abstract**

An object is to increase the probability to transmit an RLC-status-report when "Distributed RLCs" has been applied. In the mobile communication system according to the present invention, when "Inter-eNB CA" is being performed, a radio base station MeNB transmits to a mobile station UE all RLC-status-report corresponding to an upbound data signal received from the mobile station UE.

## Description

### TECHNICAL FIELD

The present invention relates to a mobile communication system.

### BACKGROUND ART

In the LTE (Long Term Evolution) system, to provide the sequence control and the overlap control, the RLC (Radio Link Control) layer performs the window control on the transmitting side and the receiving side.

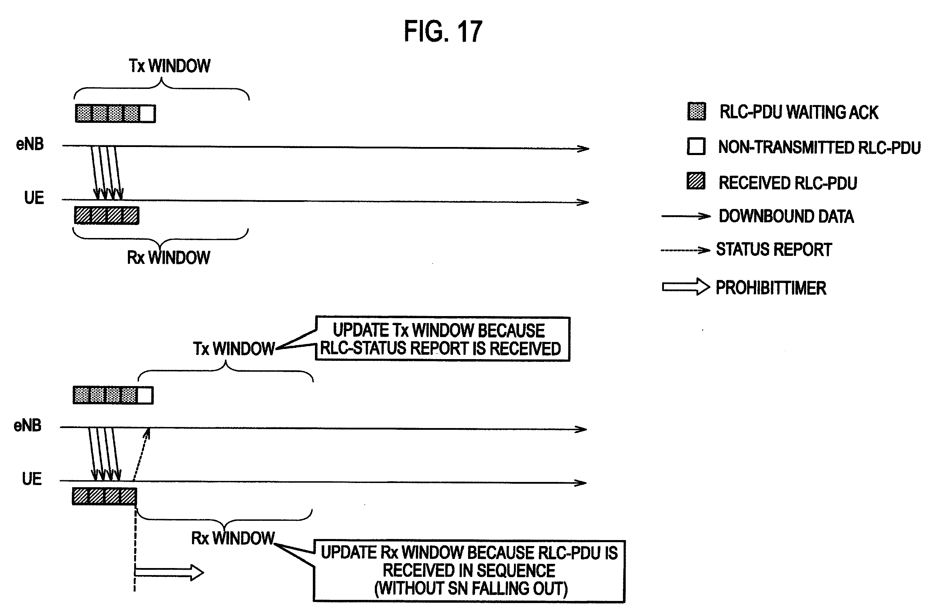

In this window control in the RLC layer on the transmitting side, as shown in FIG. 17, an SN (Sequence Number) is allocated to an RLC-PDU (Radio Link Control-Protocol Data Unit) to be transmitted a new. Moreover, with the reception of an RLC-status-report (ACK/NACK) from the RLC layer on the receiving side as a trigger, updating a "Tx window (transmitting side window) " or re-transmission in the RLC layer is executed.

On the other hand, in the window control in the RLC layer on the receiving side, as shown in FIG. 17, an "Rx window (receiving side window) " is updated when the RLC-PDU is received in the order of the SN.

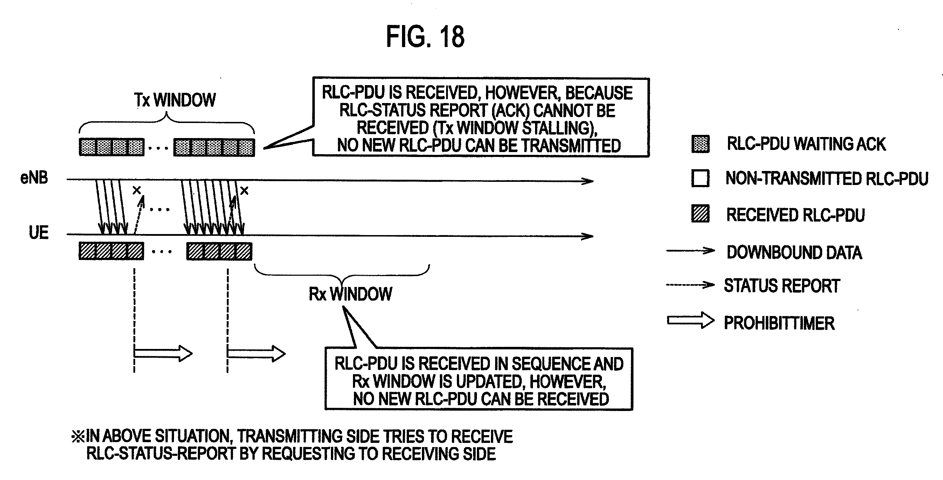

As shown in FIG. 18, when the RLC layer on the transmitting side cannot receive the RLC-status-report from the RLC layer on the receiving side, the RLC layer on the transmitting side cannot update the "Tx window (transmitting side window) " whereby a "Tx window stalling" occurs. When the "Tx window stalling" occurs, it is not possible to transmit a new RLC-PDU.

Therefore, it is necessary that the RLC layer on the receiving side transmits the RLC-status-report to the RLC layer on the transmitting side at an appropriate frequency.

In the situations where the RLC layer on the receiving side has received a feedback request (which is transmitted periodically or at the end or the like of the RLC-PDU) from the RLC layer on the transmitting side, or when the RLC layer on the receiving side has detected falling out of an SN in the received RLC-PDU, and the like, the RLC layer on the receiving side transmits the RLC-status-report.

However, the RLC layer on the receiving side does not transmit the RLC-status-report if a "Prohibit timer" is in an activated state.

The "Prohibit timer" is activated when transmitting the RLC-status-report.

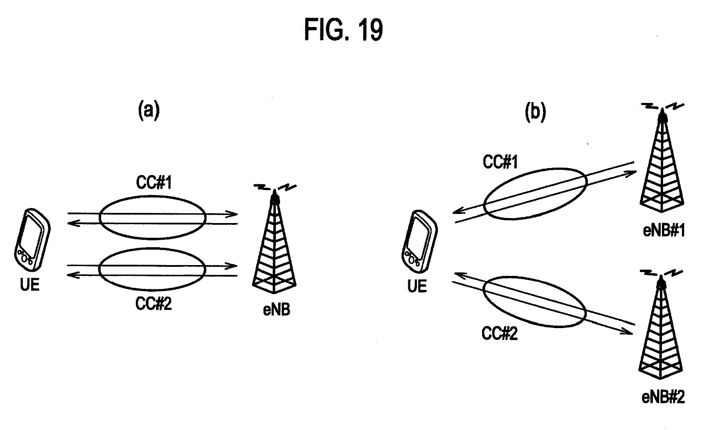

In a CA (Carrier Aggregation) that has been defined up to Release-10 of the LTE system, as shown in FIG. 19(a), it was possible to realize simultaneous communication at high throughput by use of a CC (Component Carrier) #1 and a CC#2 that are under the control of the same radio base station eNB.

On the other hand, as shown in FIG. 19(b),in Release-12 of the LTE system, the CA up to Release-10 of the LTE system has been expanded and an "Inter-eNB CA (or Inter-node UP aggregation)" is being considered to realize simultaneous Communication at high throughput by use of a CC#1 and a CC#2 that are respectively under the control of different radio base stations eNB#1 and eNB#2 (refer to Non-Patent Document 1).

For example, in a situation where all the CCs cannot be accommodated within a single radio base station eNB, it is necessary to perform the "Inter-eNB CA" to realize a throughput that is comparable to the throughput in Release-10 of the LTE system.

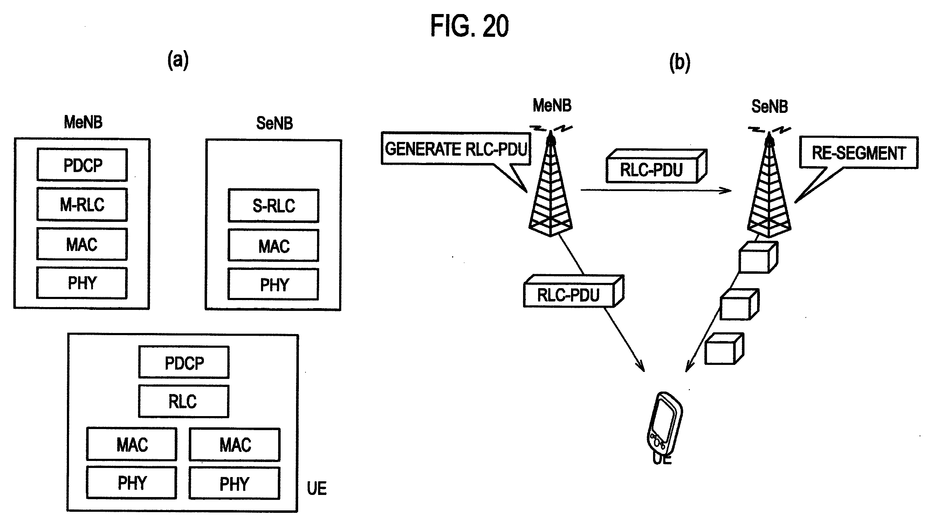

To this effect, as shown in FIGS. 20 (a) and 20 (b), "Distributed RLCs" has been proposed as a mechanism to realize the "Inter-eNB CA".

In the "Distributed RLCs", as shown in FIGS. 20 (a) and 20 (b), an M-RLC (Master-RLC) layer function of a radio base station MeNB generates an RLC-PDU, the radio base station MeNB transmits the generated RLC-PDU to an S-RLC (Slave-RLC) layer function of another radio base station SeNB, and the S-RLC layer function of the radio base station SeNB transmits the RLC-PDU to a mobile station UE.

The S-RLC function of the radio base station SeNB performs re-segmentation of the received RLC-PDU, if required.

The re-segmentation is one of the RLC controls specified in Release-8 of the LTE system. The re-segmentation refers to a process in which, when retransmitting the RLC-PDU, if a sufficient TBS (Transport Block Size) cannot be obtained for the RLC-PDU that is the object of retransmission, the S-RLC layer function performs segmentation of the RLC-PDU and transmits the RLC-PDU in segments.

A protocol stack for realizing the "Distributed RLCs" is shown in FIG. 20(a).

### PRIOR ART DOCUMENT

### NON-PATENT DOCUMENT

Non-Patent Document 1: 3GPP Contribution R2-131782.

### SUMMARY OF THE INVENTION

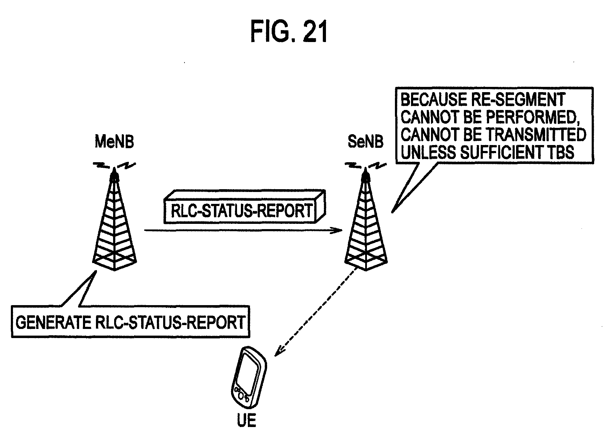

However, the RLC-status-report cannot be re-segmented. Therefore, in the mobile communication system to which the "Distributed RLCs" has been applied, when the radio base station SeNB does not use the TBS (Transport Block Size) that is sufficient to transmit the RLC-status-report, there may be a situation where the radio base station SeNB cannot transmit the RLC-status-report corresponding to the RLC-PDU (uplink signal) received from the mobile station UE (refer to FIG. 21) .

The present invention has been made in view of the above discussion. It is an object of the present invention to provide a mobile communication system in which it is possible to increase the probability of transmitting the RLC-status-report in a situation where the "Distributed RLCs" has been applied.

A first feature of the present invention is summarized as a mobile communication system in which a mobile station performs carrier aggregation by using a cell that is under the control of a master radio base station and a cell that is under the control of a slave radio base station, when the carrier aggregation is being performed, the master radio base station transmits to the mobile station all the status report of RLC layer corresponding to an upbound data signal from the mobile station.

A second feature of the present invention is summarized as a mobile communication system in which a mobile station performs carrier aggregation by using a cell that is under the control of a master radio base station and a cell that is under the control of a slave radio base station, when the carrier aggregation is being performed, the master radio base station notifies the slave radio base station of a receiving state of an upbound data signal from the mobile station, the slave radio base station generates a status report of an RLC layer corresponding to the upbound data signal based on the receiving state and a transport block size and transmits the generated status report to the mobile station.

A third feature of the present invention is summarized as a mobile communication system in which a mobile station performs carrier aggregation by using a cell that is under the control of a master radio base station and a cell that is under the control of a slave radio base station, when the carrier aggregation is being performed, the master radio base station transmits to the slave radio base station a status report of an RLC layer corresponding to an upbound data signal from the mobile station, the slave radio base station generates a new status report of an RLC layer corresponding to the upbound data signal by reducing confirmation information included in the status report and transmits the new status report to the mobile station.

A fourth feature of the present invention is summarized as a mobile communication system in which a mobile station performs carrier aggregation by using a cell that is under the control of a master radio base station and a cell that is under the control of a slave radio base station, when the carrier aggregation is being performed, the master radio base station transmits to the slave radio base station a status report of an RLC layer corresponding to an upbound data signal from the mobile station, the slave radio base station divides the status report into a plurality of units, the slave radio base station notifies the mobile station of confirmation information included in the status report in the divided units.

A fifth feature of the present invention is summarized as a mobile communication system in which a mobile station performs carrier aggregation by using a cell that is under the control of a master radio base station and a cell that is under the control of a slave radio base station, when the carrier aggregation is being performed, the slave radio base station notifies the master radio base station of information about own transport block size, the master radio base station generates a status report of an RLC layer corresponding to an upbound data signal from the mobile station based on the information about the transport block size and transmits the generated status report to the mobile station.

A sixth feature of the present invention is summarized as a mobile communication system in which a mobile station performs carrier aggregation by using a cell that is under the control of a master radio base station and a cell that is under the control of a slave radio base station, when the carrier aggregation is being performed, the master radio base station transmits to the slave radio base station a status report of an RLC layer corresponding to an upbound data signal from the mobile station, and when the slave radio base station is not able to transmit the status report received from the master radio base station to the mobile station within a predetermined period, the slave radio base station notifies the master radio base station of this fact.

### BRIEF DESCRIPTION OF DRAWINGS

FIG. 1 is an overall structural diagram of a mobile communication system according to a first embodiment of the present invention.
FIG. 2 is a functional block diagram of a radio base station MeNB according to the first embodiment of the present invention.
FIG. 3 shows an example of formats of an RLC-Data-PDU and an RLC-Status-report used in the mobile communication system according to the first embodiment of the present invention.
FIG. 4 is a flowchart of operations performed by the radio base station MeNB according to the first embodiment of the present invention.
FIG. 5 is an overall structural diagram of a mobile communication system according to a second embodiment of the present invention.
FIG. 6 is a functional block diagram of a radio base station SeNB according to the second embodiment of the present invention.
FIG. 7 is a flowchart of operations performed by a radio base station MeNB according to the second embodiment of the present invention.
FIG. 8 is view for explaining a mobile communication system according to a third embodiment of the present invention.
FIG. 9 is a flowchart of operations performed by a radio base station SeNB according to the third embodiment of the present invention.
FIG. 10 is a view for explaining a mobile communication system according to a fourth embodiment of the present invention.
FIG. 11 is a view for explaining the mobile communication system according to the fourth embodiment of the present invention.
FIG. 12 is a flowchart of operations performed by a radio base station SeNB according to the fourth embodiment of the present invention.
FIG. 13 is an overall structural diagram of a mobile communication system according to a fifth embodiment of the present invention.
FIG. 14 is a flowchart of operations performed by a radio base station MeNB according to the fifth embodiment of the present invention.
FIG. 15 is a view for explaining a mobile communication system according to a sixth embodiment of the present invention.
FIG. 16 is a flowchart of operations performed by a radio base station SeNB according to the sixth embodiment of the present invention.
FIG. 17 is a view for explaining a window control in an RLC layer.
FIG. 18 is a view for explaining "Tx window stalling".
FIG. 19 is a view for explaining carrier aggregation.
FIG. 20 is a view for explaining "Distributed RLCs".
FIG. 21 is a view for explaining a situation in which an RLC-status-report cannot be transmitted.

### MODES FOR CARRYING OUT THE INVENTION

### Mobile Communication System According to First Embodiment of Present Invention

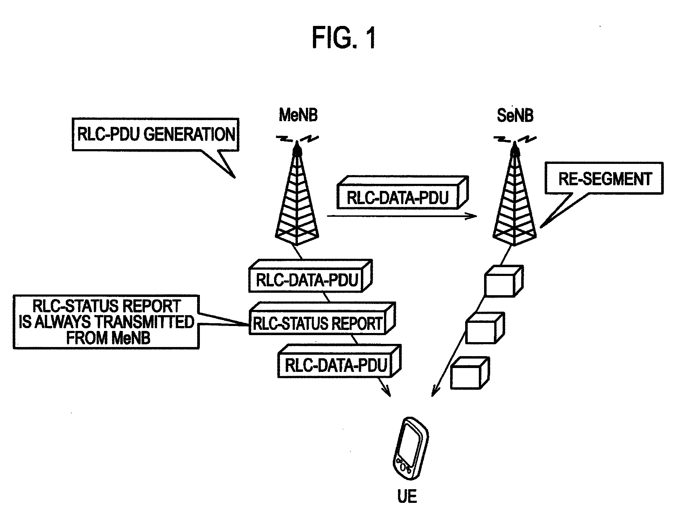

A mobile communication system according to a first embodiment of the present invention is explained below while referring to FIGS. 1 to 4. A mobile communication system of the LTE system is exemplified as the mobile communication system according to the present embodiment; however, the present invention is also applicable to a mobile communication system other than that of the LTE system.

As shown in FIG. 1, the mobile communication system according to the present embodiment includes a radio base station MeNB and a radio base station SeNB.

In the mobile communication system according to the present embodiment, the radio base station MeNB is a master radio base station (or, a macro radio base station that manages a macro cell) and the radio base station SeNB is a slave radio base station (or, a small radio base station that manages a small cell).

Moreover, in the mobile communication system according to the present embodiment, a mobile station UE can perform the "Inter-eNB CA" by using a cell that is under the control of the radio base station MeNB and a cell that is under the control of the radio base station SeNB.

It is assumed here that the "Distributed RLCs" has been applied in the mobile communication system according to the present embodiment.

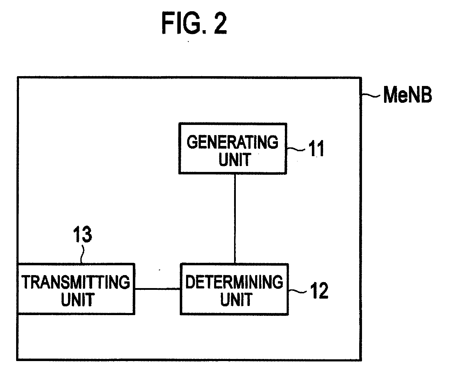

As shown in FIG. 2, the radio base station MeNB according to the present embodiment includes a generating unit 11, a determining unit 12, and a transmitting unit 13.

The generating unit 11 generates an RLC-Data-PDU, an RLC-Control-PDU, and the like addressed to the mobile station UE.

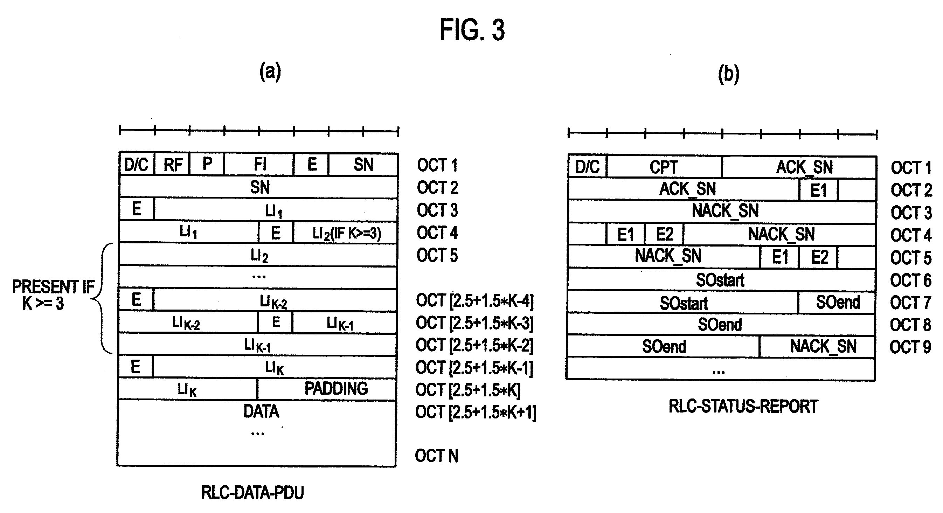

An example of a format of the RLC-Data-PDU is shown in FIG. 3 (a) and an example of a format of an RLC-status-report, which is a type of the RLC-Control-PDU, is shown in FIG. 3 (b) .

The determining unit 12 determines to which among the mobile station UE and the radio base station SeNB the RLC-Data-PDU and the RLC-Control-PDU generated by the generating unit 11 and addressed to the mobile station UE should be transmitted.

The determining unit 12 always transmits the RLC-status-report (i.e., the RLC-status-report corresponding to an uplink signal from the mobile station UE) generated by the generating unit 11 and addressed to the mobile station UE to the mobile station UE and not to the radio base station SeNB.

The determining unit 12 determines to which among the radio base station SeNB and the mobile station UE the RLC-Data-PDU generated by the generating unit 11 and addressed to the mobile station UE should be transmitted.

The transmitting unit 13 transmits the RLC-Data-PDU generated by the generating unit 11 and addressed to the mobile station UE to either the mobile station UE or the radio base station SeNB based on the determination made by the determining unit 12.

Moreover, the transmitting unit 13 always transmits the RLC-status-report generated by the generating unit 11 and addressed to the mobile station UE to the mobile station UE based on the determination made by the determining unit 12.

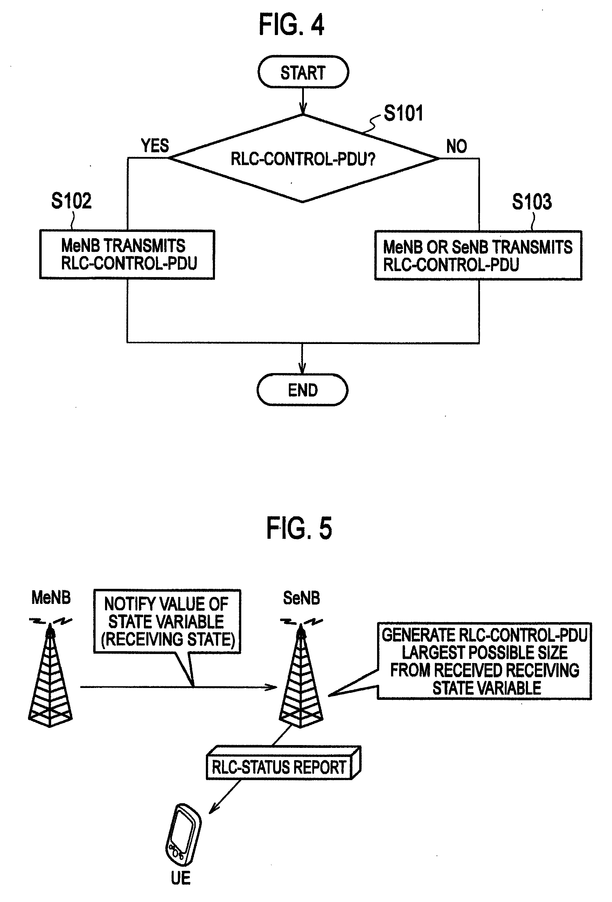

Referring now to FIG. 4, operations of the radio base station MeNB according to the present embodiment are explained below.

As shown in FIG. 4, at Step S101, the radio base station MeNB determines whether the generated RLC-PDU is the RLC-Control-PDU.

When determining that the generated RLC-PDU is the RLC-Control-PDU, the process procedure advances to Step S102. In contrast, when determining that the generated RLC-PDU is not the RLC-Control-PDU (i.e., the generated RLC-PDU is the RLC-Data-PDU), the process procedure advances to Step S103.

At Step S102, the radio base station MeNB transmits the RLC-PDU (RLC-Control-PDU) to the mobile station UE.

On the other hand, at Step S103, based on a predetermined operation policy and the like, the radio base station MeNB transmits the RLC-PDU (RLC-Data-PDU) directly to the mobile station UE, or transmits the RLC-PDU indirectly to the mobile station UE via the radio base station SeNB.

Thus, in the mobile communication system according to the present embodiment, in the mobile communication system in which the "Distributed RLCs" has been applied, when the TBS that is sufficient to transmit the RLC-status-report addressed to the mobile station UE cannot be used in the radio base station SeNB, a situation where the radio base station SeNB cannot transmit the RLC-status-report to the mobile station UE can be avoided.

### Mobile Communication System According to Second Embodiment of Present Invention

A mobile communication system according to a second embodiment of the present invention is explained below with reference to FIGS. 5 to 7 while focusing on the differences between the mobile communication system according to the first embodiment.

As shown in FIG. 5, when the "Inter-eNB CA" is performed in the mobile communication system according to the present embodiment, the transmitting unit 13 of the radio base station MeNB notifies the radio base station SeNB of a receiving state of the RLC-PDU (uplink data signal) received from the mobile station UE.

An RLC state variable and the like can be considered as the receiving state of the RLC-PDU. Examples of the RLC state variable include VR (R), VR (X), and the like prescribed in the existing 3GPP.

Specifically, it is possible to have a structure in which, when the transmitting unit 13 of the radio base station MeNB desires to transmit the RLC-status-report corresponding to the RLC-PDU received from the mobile station UE to the mobile station UE via the radio base station SeNB, the transmitting unit 13 notifies the radio base station SeNB of the receiving state of the RLC-PDU received from the mobile station UE instead of transmitting the RLC-status-report.

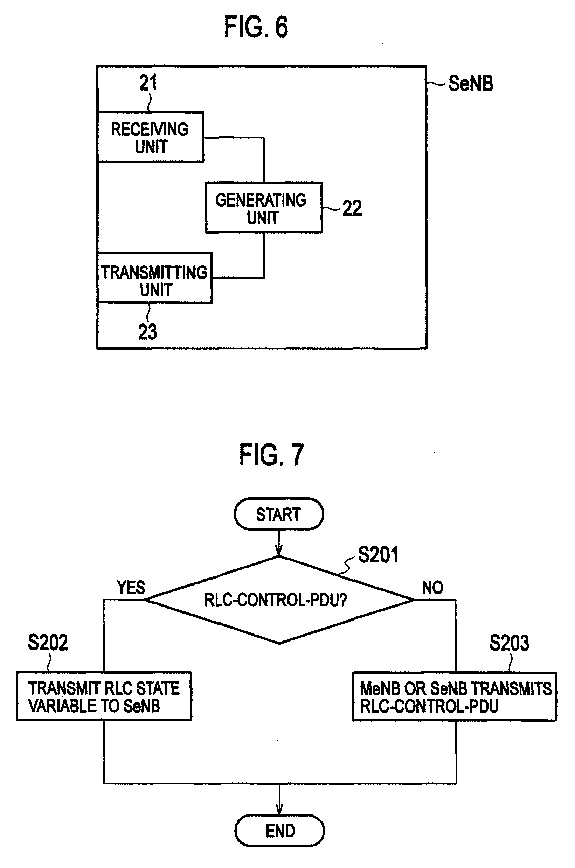

As shown in FIG. 6, the radio base station SeNB includes a receiving unit 21, a generating unit 22, and a transmitting unit 23.

The receiving unit 21 receives various signals from the radio base station MeNB and the mobile station UE. The transmitting unit 23 receives various signals to the radio base station MeNB and the mobile station UE.

For example, when the "Inter-eNB CA" is being performed, the receiving unit 21 receives the receiving state from the radio base station MeNB.

The generating unit 22 generates the RLC-Control-PDU, such as the LC-status-report, corresponding to the RLC-PDU received from the mobile station UE.

Specifically, the generating unit 22 generates the RLC-status-report corresponding to the RLC-PDU received from the mobile station UE based on the receiving state transmitted by the radio base station MeNB and the TBS (the TBS used at that point in the radio base station SeNB).

In Release-8 of the LTE system, upon detecting a transmission trigger that instructs transmission of the RLC-status-report, the RLC layer on the receiving side calculates the amount of information of ACK/NACK that needs to be transmitted based on the receiving state of the RLC-PDU at that point in time. And, if the TBS that is sufficient to store all the ACK/NACK cannot be used, the RLC-status-report is transmitted after reducing the ACK/NACK that needs to be transmitted to fit within the available TBS.

The generating unit 22 can use this property to generate the RLC-status-report corresponding to the RLC-PDU transmitted by the mobile station UE.

The transmitting unit 23 transmits the RLC-status-report generated by the generating unit 22 to the mobile station UE.

Referring now to FIG. 7, operations performed by the radio base station MeNB according to the present embodiment are explained.

As shown in FIG. 7, at Step S201, the radio base station MeNB determines whether the RLC-PDU that needs to be transmitted is the RLC-Control-PDU.

When it is determined that the generated RLC-PDU is the RLC-Control-PDU, the process procedure advances to Step S202. On the other hand, when it is determined that the generated RLC-PDU is not the RLC-Control-PDU (i.e., the generated RLC-PDU is the RLC-Data-PDU), the process procedure advances to Step S203.

At Step S202, the radio base station MeNB notifies the radio base station SeNB of the receiving state of the RLC-PDU (e.g., the RLC state variable) received from the mobile station UE.

On the other hand, at Step S203, the radio base station MeNB transmits, based on a predetermined operation policy and the like, the RLC-PDU (RLC-Data-PDU) directly to the mobile station UE, or transmits the RLC-PDU (RLC-Data-PDU) indirectly to the mobile station UE via the radio base station SeNB.

Thus, in the mobile communication system according to the present embodiment, in the mobile communication system in which the "Distributed RLCs" has been applied, even when the TBS that is sufficient to transmit the RLC-status-report addressed to the mobile station UE cannot be used in the radio base station SeNB, the radio base station SeNB can generate and transmit the RLC-status-report after reducing the ACK/NACK that needs to be transmitted.

### Mobile Communication System According to Third Embodiment of Present Invention

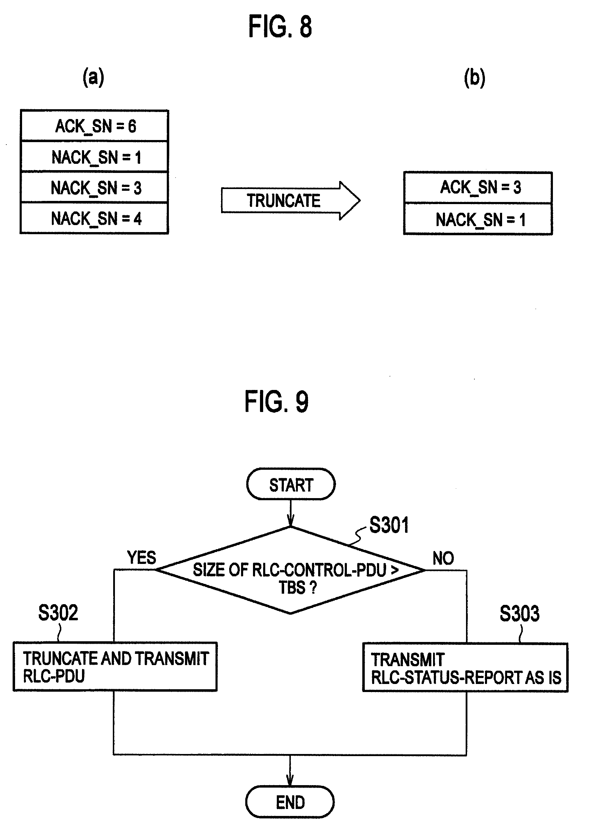

A mobile communication system according to a third embodiment of the present invention is explained below with reference to FIGS. 8 and 9 while focusing on the differences between the mobile communication system according to the first and second embodiments.

In the mobile communication system according to the present embodiment, when the "Inter-eNB CA" is being performed, the transmitting unit 13 of the radio base station MeNB transmits to the radio base station SeNB the RLC-status-report corresponding to the RLC-PDU received from the mobile station UE.

The generating unit 22 of the radio base station SeNB reduces (truncate) the RLC-status-report transmitted by the radio base station MeNB to fit within the TBS used in the radio base station SeNB.

For example, a situation is considered here in which the mobile station UE transmits the RLC-PDU of "SN = 0 to 5", and, the reception of the RLC-PDU of only "SN = 0, 2, 5" is completed in the radio base station MeNB or the radio base station SeNB.

In this situation, as shown in FIG. 8(a), the radio base station MeNB generates an RLC-status-report for which "ACK_SN = 6" and "NACK_SN = 1, 3, 4" have been set, and transmits the RLC-status-report to the radio base station SeNB.

The "ACK_SN" refers to an SN of an RLC-PDU expected to be received next, and the "NACK_SN" refers to an SN of an RLC-PDU that is not received according to the sequence.

The radio base station SeNB (the generating unit 22 and the transmitting unit 23) generates a new RLC-status-report corresponding to the RLC-PDU received from the mobile station UE and transmits the generated RLC-status-report to mobile station UE after reducing confirmation information (ACK/NACK) included in the RLC-status-report transmitted by the radio base station MeNB.

Specifically, the radio base station SeNB reduces the amount of information included in the RLC-status-report based on the RLC-status-report shown in FIG. 8(a). Moreover, the radio base station SeNB generates, as shown in FIG. 8(b), a new RLC-status-report for which "ACK_SN = 3" and "NACK_SN = 1" are set, and transmits the generated RLC-status-report to the mobile station UE.

However, because the new RLC-status-report is unable to transmit all the ACK/NACKs included in the RLC-status-report generated by the radio base station MeNB, the mobile station UE performs retransmission of the RLC-PDU of "SN = 3 to 5".

Referring now to FIG. 9, operations of the radio base station SeNB according to the present embodiment are explained.

As shown in FIG. 9, at Step S301, the radio base station SeNB determines whether a size of the RLC-status-report (RLC-Control-PDU) transmitted by the radio base station MeNB is larger than the TBS used at present in the radio base station SeNB.

When it is determined that the size of the RLC-status-report is larger than the TBS, the process procedure advances to Step S302, otherwise the process procedure advances to Step S303.

At Step S302, the radio base station SeNB generates a new RLC-status-report with reduced amount of information of the ACK/NACK (e.g., includes only some of the ACK/NACK) included in the RLC-status-report, and transmits the generated RLC-status-report to the mobile station UE.

In contrast, at Step S303, the radio base station SeNB transmits the RLC-status-report as is to the mobile station UE.

Thus, in the mobile communication system according to the present embodiment, in the mobile communication system in which the "Distributed RLCs" has been applied, even when the TBS that is sufficient to transmit the RLC-status-report addressed to the mobile station UE cannot be used in the radio base station SeNB, the radio base station SeNB can generate and transmit the new RLC-status-report after reducing the amount of information of the ACK/NACK.

When the amount of information of the ACK/NACK included in the RLC-status-report is reduced in the radio base station SeNB, this fact can be indicated in a header of the RLC-PDU or a MAC-PDU (e.g., by setting a corresponding bit).

### Mobile Communication System According to Fourth Embodiment of Present Invention

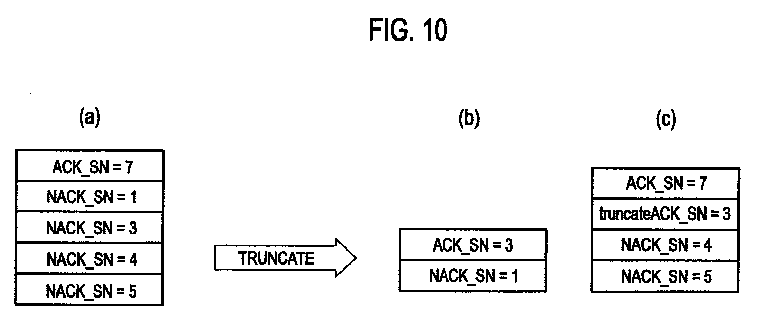

A mobile communication system according to a fourth embodiment of the present invention is explained below with reference to FIGS. 10 to 12 while focusing on the differences between the mobile communication system according to the first to third embodiments.

In the mobile communication system according to the present embodiment, when the "Inter-eNB CA" is being performed, the transmitting unit 13 of the radio base station MeNB transmits to the radio base station SeNB the RLC-status-report corresponding to the RLC-PDU received from the mobile station UE.

The generating unit 22 of the radio base station SeNB divides the RLC-status-report into a plurality of units. The transmitting unit 23 notifies the mobile station UE of all the confirmation information (ACK/NACK) included in the RLC-status-report in the divided units.

For example, a situation is considered here in which the mobile station UE transmits the RLC-PDU of "SN = 0 to 6", and, the reception of the RLC-PDU of only "SN = 0, 2, 6" is completed in the radio base station MeNB or the radio base station SeNB.

In this situation, as shown in FIG. 10(a), the radio base station MeNB generates an RLC-status-report for which "ACK_SN = 7" and "NACK_SN = 1, 3, 4, 5" are set, and transmits the generated RLC-status-report to the radio base station SeNB.

Specifically, the radio base station SeNB divides the RLC-status-report into one unit (RLC-Control-PDU) shown in FIG. 10(b) and another unit (RLC-Control-PDU) show in FIG. 10(c).

"ACK_SN = 3" and "NACK_SN = 1" are set in the unit shown in FIG. 10(b), and "ACK_SN = 7", "truncateACK_SN = 3", and "NACK_SN = 4, 5" are set in the unit shown in FIG. 10(c) .

The "truncateACK_SN" indicates that the ACK/NACK of the RLC-PDU having an SN lower than the current SN will be notified in another unit (RLC-Control-PDU). Because the SNs are repeated, "an SN lower than the current SN" means an SN that is old in terms of time than the current SN.

The RLC layer on the transmitting side handles the RLC-PDU shown with the "truncateACK_SN" as not received by the RLC layer on the receiving side.

By using the unit (RLC-Control-PDU) shown in FIG. 10 (b) and the unit (RLC-Control-PDU) show in FIG. 10(c), it is possible to notify of all the ACK/NACKs included in the RLC-status-report transmitted by the radio base station MeNB.

If there are a large number of the "NACK_SN" and the radio base station SeNB divides the RLC-status-report into a large number of units, the overhead disadvantageously increases. Therefore, it is allowable to limit the number of units into which the RLC-status-report can be divided.

For example, a situation is considered here in which the mobile station UE transmits the RLC-PDU of "SN = 1 to 100" and, the reception of the RLC-PDU of only "SN = 0, 100" is completed in the radio base station MeNB or the radio base station SeNB.

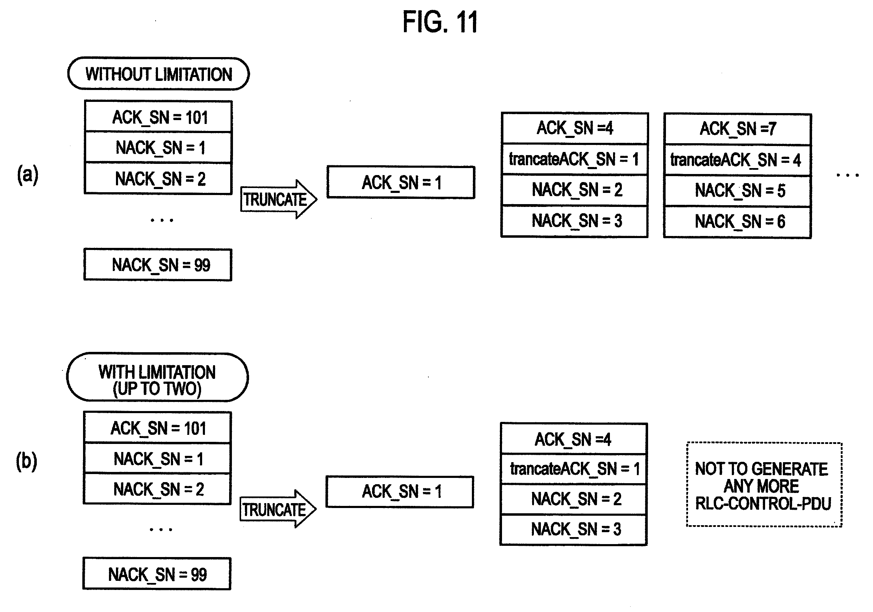

In this situation, as shown in FIG. 11 (a), the radio base station MeNB generates an RLC-status-report for which "ACK_SN = 101" and "NACK_SN = 1 to 99" are set, and transmits the RLC-status-report to the radio base station SeNB.

When the TBS used in the radio base station SeNB is of a size that allows transmission of one "ACK_SN" and three "NACK_SN", as shown in FIG. 11(a), the radio base station SeNB will divide the RLC-status-report into a large number of units, and this is not desirable from the viewpoint of overhead.

Thus, for example, as shown in FIG. 11(b), if the number of units into which the RLC-status-report can be divided is limited to "2", the radio base station SeNB will divide the RLC-status-report into only a unit set with "ACK_SN = 1" and another unit set with "ACK_SN = 4", "truncateACK_SN = 1", and "NACK_SN = 2, 3".

In this case, because the radio base station SeNB does not divide the RLC-status-report into more than two units, the radio base station SeNB cannot notify the mobile station UE of all the ACK/NACKs included in the RLC-status-report.

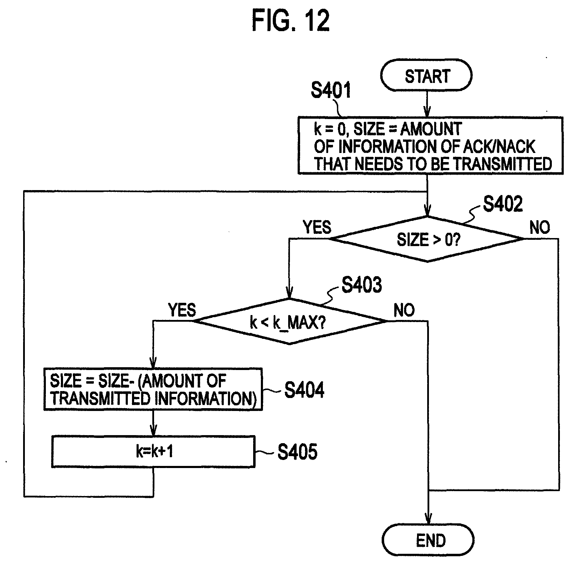

Referring to FIG. 12, operations of the radio base station SeNB according to the present embodiment are explained.

As shown in FIG. 12, at Step S401, the radio base station SeNB sets "k (the number of the units) = 0" and sets "size = amount of information of the ACK/NACK (the ACK/NACK included in the RLC-status-report transmitted by the radio base station MeNB) that needs to be transmitted". At Step S402, the radio base station SeNB determines whether the "size" is larger than "0".

When it is determined that the "size" is larger than "0", the process procedure advances to Step S403, otherwise the process procedure comes to an end.

At Step S403, the radio base station SeNB determines whether the "k" is smaller than "k_max" (a maximum value of k) .

When it is determined that the "k" is smaller than the "k_max", the process procedure advances to Step S404, otherwise the process procedure comes to an end.

At Step S404, the radio base station SeNB transmits the ACK/NACK that needs to be transmitted after dividing into units that will fit within the TBS used in the radio base station SeNB, and the radio base station SeNB subtracts from the "size" the amount of information of the ACK/NACK that was transmitted in the units.

At Step S405, the radio base station SeNB increments the value of "k" by one, and the process procedure returns to Step S402.

Thus, in the mobile communication system according to the present embodiment, in the mobile communication system in which the "Distributed RLCs" has been applied, even when the TBS that is sufficient to transmit the RLC-status-report addressed to the mobile station UE cannot be used in the radio base station SeNB, the radio base station SeNB can transmit the ACK/NACK included in the RLC-status-report in the units obtained by dividing the RLC-status-report.

### Mobile Communication System According to Fifth Embodiment of Present Invention

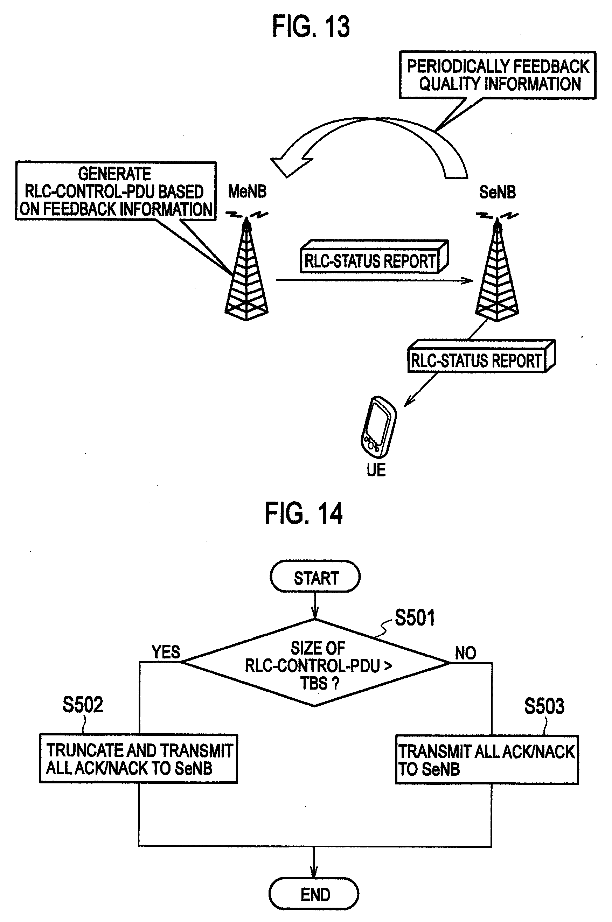

A mobile communication system according to a fifth embodiment of the present invention is explained below with reference to FIGS. 13 and 14 while focusing on the differences between the mobile communication system according to the first to fourth embodiments.

As shown in FIG. 13, in the mobile communication system according to the present embodiment, when the "Inter-eNB CA" is being performed, the radio base station SeNB (the transmitting unit 23) periodically notifies the radio base station MeNB of, as feedback information, information about its own TBS.

As the information about the TBS, the maximum value or the mean value of the TBS used in the radio base station SeNB during a predetermined period and the like can be used.

The radio base station MeNB (the generating unit 11) generates the RLC-status-report corresponding to the RLC-PDU received from the mobile station UE based on the information about the TBS and transmits the generated RLC-status-report to the mobile station UE.

Referring to FIG. 14, operations of the radio base station MeNB according to the present embodiment are explained.

As shown in FIG. 14, at Step S501, the radio base station MeNB determines whether a size of the generated RLC-status-report (RLC-Control-PDU) is larger than a TBS notified of by the radio base station SeNB.

When it is determined that the size of the RLC-status-report is larger than the TBS, the process procedure advances to Step S502, otherwise the process procedure advances to Step S503.

At Step S502, the radio base station MeNB reduces an amount of information of the ACK/NACK included in the RLC-status-report, and transmits the information-reduced RLC-status-report to the radio base station SeNB.

On the other hand, at Step S503, the radio base station MeNB transmits the RLC-status-report as is to the mobile station UE.

Thus, in the mobile communication system according to the present embodiment, in the mobile communication system in which the "Distributed RLCs" has been applied, even when the TBS that is sufficient to transmit the RLC-status-report addressed to the mobile station UE cannot be used in the radio base station SeNB, the radio base station MeNB can reduce the amount of information of the ACK/NACK that needs to be included in the RLC-status-report based on the TBS used in the radio base station SeNB at that point in time.

### Mobile Communication System According to Sixth Embodiment of Present Invention

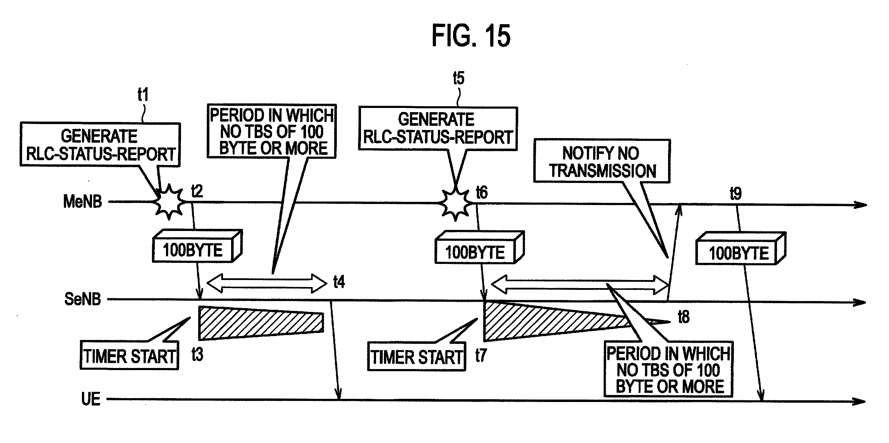

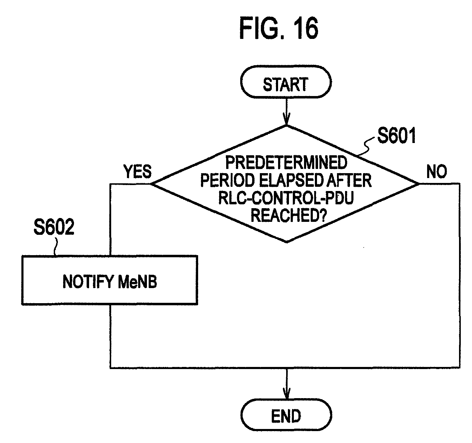

A mobile communication system according to a sixth embodiment of the present invention is explained below with reference to FIGS. 15 and 16 while focusing on the differences between the mobile communication system according to the first to fifth embodiments.

As shown in FIG. 15, in the mobile communication system according to the present embodiment, when the "Inter-eNB CA" is being performed, the radio base station MeNB (the transmitting unit 13) transmits to the radio base station SeNB the RLC-status-report corresponding to the RLC-PDU received from the mobile station UE (refer to time points t2 and t6).

When the radio base station SeNB (the transmitting unit 23) is not able to transmit the RLC-status-report received from the radio base station MeNB to the mobile station UE within a predetermined period (e.g., a period in which there is no TBS of 100 bytes or more), the radio base station SeNB notifies the radio base station MeNB of this fact.

Referring to FIG. 15, operations of the mobile communication system according to the present embodiment are explained.

As shown in FIG. 15, when the "Inter-eNB CA" is being performed, at a time point t1, the radio base station MeNB generates an RLC-status-report (100 byte) corresponding to the RLC-PDU received from the mobile station UE, and at the time point t2, the radio base station MeNB transmits the generated RLC-status-report (100 byte) to the radio base station SeNB.

At a time point t3, when the radio base station SeNB receives the RLC-status-report (100 byte), the radio base station SeNB starts a timer to start measuring a predetermined period.

Then, at a time point t4, the radio base station SeNB transmits the RLC-status-report (100 byte) to the mobile station UE and stops the timer.

For example, the timer can be stopped when the TBS of 100 bytes or more becomes available for use.

At a time point t5, the radio base station MeNB generates an RLC-status-report (100 byte) corresponding to the RLC-PDU received from the mobile station UE, and at the time point t6, the radio base station MeNB transmits the generated RLC-status-report (100 byte) to the radio base station SeNB.

At a time point t7, when the radio base station SeNB receives the RLC-status-report (100 byte), the radio base station SeNB starts the timer to start measuring a predetermined period.

At a time point t8, if the timer expires but the radio base station SeNB is unable to transmit the RLC-status-report, the radio base station SeNB notifies the radio base station MeNB of not having been able to transmit the RLC-status-report (100 byte) to the mobile station UE.

When this occurs, the radio base station SeNB can respond to the radio base station MeNB about the RLC-status-report (100 byte) or can be discard the RLC-status-report (100 byte).

At a time point t9, the radio base station MeNB transmits the RLC-status-report (100 byte) generated at the time point t5 directly to the mobile station UE in response to a notice from the radio base station SeNB.

The radio base station MeNB can regenerate the RLC-status-report in response to the notice and transmit the generated RLC-status-report to the radio base station SeNB. When doing so, the radio base station MeNB may not consider whether "Prohibit timer" is in the activated state or not. With such a control, the possibility of occurrence of the "Tx window stalling", which occurs due to a delay in the reception of the RLC-status-report, can be reduced in the RLC layer on the transmitting side.

Referring to FIG. 16, operations of the radio base station SeNB according to the present embodiment are explained.

As shown in FIG. 16, when the "Inter-eNB CA" is being performed, at Step S601, the radio base station SeNB determines whether the predetermined period has elapsed but the RLC-status-report cannot be transmitted after the RLC-status-report (RLC-Control-PDU) was received from the radio base station MeNB.

When it is determined that the predetermined period has elapsed, the process procedure advances to Step S602, and when it is determined that the predetermined period has not elapsed, the process procedure comes to an end.

At Step S602, the radio base station SeNB notifies the radio base station MeNB of not having been able to transmit the RLC-status-report received from the radio base station MeNB to the mobile station UE within the predetermined period.

Thus, in the mobile communication system according to the present embodiment, in the mobile communication system in which the "Distributed RLCs" has been applied, when the radio base station SeNB is not able to transmit the RLC-status-report addressed to the mobile station UE, the radio base station MeNB can transmit the RLC-status-report directly to the mobile station UE.

Alternatively, in the mobile communication system according to the present embodiment, in the mobile communication system in which the "Distributed RLCs" has been applied, when the radio base station SeNB is not able to transmit the RLC-status-report addressed to the mobile station UE, the radio base station MeNB can reduce the amount of information of the ACK/NACK included in the RLC-status-report by receiving a notice from the radio base station SeNB.

The characteristic of the present embodiments explained above can be expressed as follows.

A first feature of the present embodiment is summarized as a mobile communication system in which a mobile station UE performs "Inter-eNB CA (carrier aggregation)" by using a cell that is under the control of a radio base station MeNB (master radio base station) and a cell that is under the control of a radio base station SeNB (slave radio base station), when the "Inter-eNB CA" is being performed, the radio base station MeNB transmits to the mobile station UE all RLC-status-report (all the status report of an RLC layer) corresponding to an upbound data signal from the mobile station UE.

A second feature of the present embodiment is summarized as a mobile communication system in which a mobile station UE performs "Inter-eNB CA" by using a cell that is under the control of a radio base station MeNB and a cell that is under the control of a radio base station SeNB, when the "Inter-eNB CA" is being performed, the radio base station MeNB notifies the radio base station SeNB of a receiving state of an upbound data signal from the mobile station UE, the radio base station SeNB generates an RLC-status-report corresponding to the upbound data signal from the mobile station UE based on the receiving state and a TBS (transport block size) and transmits the generated RLC-status-report to the mobile station UE.

A third feature of the present embodiment is summarized as a mobile communication system in which a mobile station UE performs "Inter-eNB CA" by using a cell that is under the control of a radio base station MeNB and a cell that is under the control of a radio base station SeNB, when the "Inter-eNB CA" is being performed, the radio base station MeNB transmits to the radio base station SeNB an RLC-status-report corresponding to an upbound data signal from the mobile station UE, the radio base station SeNB generates a new RLC-status-report corresponding to the upbound data signal from the mobile station UE by reducing confirmation information (ACK/NACK) included in the RLC-status-report and transmits the new RLC-status-report to the mobile station UE.

A fourth feature of the present embodiment is summarized as a mobile communication system in which a mobile station UE performs "Inter-eNB CA" by using a cell that is under the control of a radio base station MeNB and a cell that is under the control of a radio base station SeNB, when the "Inter-eNB CA" is being performed, the radio base station MeNB transmits to the radio base station SeNB an RLC-status-report corresponding to an upbound data signal from the mobile station UE, the radio base station SeNB divides the RLC-status-report into a plurality of units, the radio base station SeNB notifies the mobile station UE of confirmation information (ACK/NACK) included in the RLC-status-report in the divided units.

A fifth feature of the present embodiment is summarized as a mobile communication system in which a mobile station UE performs "Inter-eNB CA" by using a cell that is under the control of a radio base station MeNB and a cell that is under the control of a radio base station SeNB, when the "Inter-eNB CA" is being performed, the radio base station SeNB notifies the radio base station MeNB of information about own TBS, the radio base station MeNB generates an RLC-status-report corresponding to an upbound data signal from the mobile station UE based on the information about the TBS and transmits the generated RLC-status-report to the mobile station UE.

A sixth feature of the present embodiment is summarized as a mobile communication system in which a mobile station UE performs "Inter-eNB CA" by using a cell that is under the control of a radio base station MeNB and a cell that is under the control of a radio base station SeNB, when the "Inter-eNB CA" is being performed, the radio base station MeNB transmits to the radio base station SeNB an RLC-status-report corresponding to an upbound data signal from the mobile station UE, and when the radio base station SeNB is not able to transmit the RLC-status-report received from the radio base station MeNB to the mobile station UE within a predetermined period, the radio base station SeNB notifies the radio base station MeNB of this fact.

The operations of the radio base stations MeNB and SeNB can be realized by hardware, can be realized by a software module executed by a processor, or can be realized by the combination of these.

The software module can be arranged in a storage medium having a desired form such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, and a CD-ROM.

The storage medium is connected to a processor so that the processor can read / write information from / in the storage medium. Alternatively, the storage medium can be integrated in a processor. Alternatively, the storage medium and the processor can be arranged in ASIC. The ASIC can be arranged in the radio base stations MeNB and SeNB. Alternatively, the storage medium and the processor can be arranged as discrete components in the radio base stations MeNB and SeNB.

The present invention has been explained in detail by using the abovementioned embodiments; however, it is obvious for a person skilled in the art that the present invention is not limited to the embodiments explained in the present description. The present invention can be implemented by way of modifications and changes without deviating from the gist and the range of the present invention specified by the claims. Accordingly, the indication of the present description aims at exemplary explanation, and has no intention to limit to the present invention.

The entire contents of Japanese Patent Application 2013-200356 (filed on September 26, 2013) are incorporated in the description of the present application by reference.

### INDUSTRIAL APPLICABILITY

As explained above, in accordance with the present invention, a mobile communication system is provided in which it is possible to increase the probability of transmitting the RLC-status-report in a situation where the "Distributed RLCs" has been applied.

### EXPLANATION OF REFERENCE NUMERALS

- UE: Mobile station
- MeNB / SeNB: Radio base station
- 11, 22: Generating unit
- 12: Determining unit
- 13, 23: Transmitting unit
- 21: Receiving unit

## Claims

1. A mobile communication system in which a mobile station performs carrier aggregation by using a cell that is under the control of a master radio base station and a cell that is under the control of a slave radio base station, wherein
when the carrier aggregation is being performed, the master radio base station transmits to the mobile station all the status report of RLC layer corresponding to an upbound data signal from the mobile station.

2. A mobile communication system in which a mobile station performs carrier aggregation by using a cell that is under the control of a master radio base station and a cell that is under the control of a slave radio base station, wherein
when the carrier aggregation is being performed, the master radio base station notifies the slave radio base station of a receiving state of an upbound data signal from the mobile station, the slave radio base station generates a status report of an RLC layer corresponding to the upbound data signal based on the receiving state and a transport block size and transmits the generated status report to the mobile station.

3. A mobile communication system in which a mobile station performs carrier aggregation by using a cell that is under the control of a master radio base station and a cell that is under the control of a slave radio base station, wherein
when the carrier aggregation is being performed, the master radio base station transmits to the slave radio base station a status report of an RLC layer corresponding to an upbound data signal from the mobile station, the slave radio base station generates a new status report of an RLC layer corresponding to the upbound data signal by reducing confirmation information included in the status report and transmits the new status report to the mobile station.

4. A mobile communication system in which a mobile station performs carrier aggregation by using a cell that is under the control of a master radio base station and a cell that is under the control of a slave radio base station, wherein
when the carrier aggregation is being performed, the master radio base station transmits to the slave radio base station a status report of an RLC layer corresponding to an upbound data signal from the mobile station, the slave radio base station divides the status report into a plurality of units, the slave radio base station notifies the mobile station of confirmation information included in the status report in the divided units.

5. A mobile communication system in which a mobile station performs carrier aggregation by using a cell that is under the control of a master radio base station and a cell that is under the control of a slave radio base station, wherein
when the carrier aggregation is being performed, the slave radio base station notifies the master radio base station of information about own transport block size, the master radio base station generates a status report of an RLC layer corresponding to an upbound data signal from the mobile station based on the information about the transport block size and transmits the generated status report to the mobile station.

6. A mobile communication system in which a mobile station performs carrier aggregation by using a cell that is under the control of a master radio base station and a cell that is under the control of a slave radio base station, wherein
when the carrier aggregation is being performed, the master radio base station transmits to the slave radio base station a status report of an RLC layer corresponding to an upbound data signal from the mobile station, and
when the slave radio base station is not able to transmit the status report received from the master radio base station to the mobile station within a predetermined period, the slave radio base station notifies the master radio base station of this fact.
